# FASCICULE DE BREVET EUROPEEN

(11) **EP 3 772 133 B1**
(45) Date de publication et mention de la délivrance du brevet: **09.02.2022**
(21) Numéro de dépôt: 20188061.4
(22) Date de dépôt: 28.07.2020
(51) Int. Cl.: H01Q 1/42

(54) **DISPOSITIF DE PROTECTION POUR LIDAR DE VÉHICULE AUTOMOBILE**
SCHUTZVORRICHTUNG FÜR LIDAR EINES KRAFTFAHRZEUGS
PROTECTION DEVICE FOR LIDAR OF A MOTOR VEHICLE

(30) Priorité: 29.07.2019 FR 1908630
(43) Date de publication de la demande: 03.02.2021
(73) Titulaire: Compagnie Plastic Omnium SE, 69007 Lyon (FR)
(72) Inventeur: DUBOST, Elise, 01150 Sainte-Julie (FR); KADDARA, Youness, 01150 Sainte-Julie (FR); VIDAL, Sophie, 01150 Sainte-Julie (FR); STABLO, Frédéric, 01150 Sainte-Julie (FR)
(74) Mandataire: LLR

(56) Documents cités:
- EP-A1- 2 605 043
- EP-A2- 2 741 105
- WO-A2-2019/206885
- DE-A1- 19 963 004
- DE-A1-102011 119 707
- US-A1- 2018 046 183

## Description

L'invention concerne le domaine des véhicules automobiles équipés de Lidar, et plus particulièrement, le domaine des dispositifs pour masquer et protéger un tel Lidar, encore appelés « radômes » voire « lidômes ». Dans la suite de la description, le mot « radôme » est employé comme synonyme de « dispositif de protection ».

La télédétection par laser ou LiDAR, acronyme de l'expression en langue anglaise « Light Détection and Ranging » ou LaDAR, acronyme de l'expression en langue anglaise « Laser Détection and ranging » ou encore Laser Radar, est une technique de mesure à distance fondée sur l'analyse des propriétés d'un faisceau de lumière renvoyé vers son émetteur. Dans ce qui suit, on utilise le terme « Lidar » pour désigner un dispositif du type Lidar.

À la différence du radar qui emploie des ondes radio, comme par exemple dans le document DE 19 963 004 A1, lequel divulgue un système de radar pour véhicule automobile, ou du sonar qui utilise des ondes sonores, le Lidar utilise de la lumière (du spectre visible, infrarouge ou ultraviolet). Celle-ci est quasiment toujours issue d'un laser, et donc cohérente. Le Lidar, instrument incontournable de télédétection active, trouve ses applications dans des domaines très variés, notamment le guidage automatique de véhicules terrestres ou encore la sécurité routière. En particulier, des véhicules automobiles aptes à rouler en mode autonome ou en mode ACC (« Adaptative Cruise Control » en anglais, signifiant commande de régulation adaptative de la distance) peuvent être équipés de Lidars. Un tel Lidar sert en particulier à réguler la vitesse des véhicules en fonction du trafic et/ou d'obstacles sur la route. Le Lidar détecte la vitesse et la distance de l'objet précédant le véhicule porteur, de façon à maintenir notamment une distance de sécurité entre les véhicules.

Selon leur fonction, les Lidars sont montés en face avant ou arrière des véhicules, le plus souvent derrières des pare-chocs. À l'heure actuelle, à la connaissance des inventeurs, il n'existe pas de solution permettant de protéger un tel Lidar tout en garantissant ses meilleures performances, notamment une bonne transmission des ondes du Lidar.

Dans l'art antérieur, un tel Lidar, notamment son émetteur/récepteur de laser, soit n'est pas du tout protégé, c'est à dire, exposé à l'environnement extérieur, soit est recouvert par un cache en plastique, ou un radôme. Dans le premier cas, on risque d'exposer le Lidar à des agressions extérieures (pluies, glace, givre, boues, insectes, feuilles...) et on ne répond pas aux critères esthétiques des véhicules. Dans le second cas, le cache plastique, sans avoir reçu un traitement particulier, va réduire la transmission des ondes du Lidar de manière plus ou moins grande, en fonction des propriétés de la matière plastique formant le cache. Cette réduction de la transmission des ondes du Lidar est notamment liée aux réflexions des ondes du Lidar aux interfaces des deux médiums différents (air/plastique, plastique/air) et à l'absorption des ondes du Lidar par la matière plastique du cache.

Le Lidar est donc situé derrière un dispositif de protection.

Un tel dispositif de protection est soumis aux conditions climatiques auxquelles est exposé le véhicule automobile. Il est par exemple possible que du givre se forme à sa surface, ce qui a pour conséquence de gêner le passage des ondes émises par le Lidar. Par conséquent, il est nécessaire de prévoir au moins un organe de dégivrage du dispositif de protection, plus précisément au niveau de la zone à travers lesquelles les ondes du Lidar doivent passer.

Un Lidar peut voir son fonctionnement normal déréglé par la présence d'une couche de glace, de neige ou de givre, notamment dans le cas d'une température inférieure à 10 degrés Celsius. Cette couche de givre vient perturber le passage normal des ondes électromagnétiques, par conséquent de la lumière dans le cas d'un Lidar, ce qui est une source d'erreur pour l'évaluation des paramètres physiques extérieurs.

Afin d'éviter le dépôt de givre, qui nuit au fonctionnement correct du Lidar, il est indispensable de prévoir un système de dégivrage, par exemple sur l'élément qui sert de radôme.

Un tel système de dégivrage est traditionnellement formé d'une piste chauffante, constituée de fils conducteurs capables de transformer une énergie électrique en énergie thermique est associée à deux plaques de connexion disposées à chaque extrémité de la piste chauffante afin de l'alimenter en un courant électrique. Ce système est positionné sur un élément pour pièce de carrosserie situé à proximité d'un capteur. L'énergie thermique ainsi dégagée permet de dégivrer localement la pièce dans le cas où une couche de givre s'est formée.

Cependant, les organes de dégivrage connus laissant passer les ondes radar ne laissent pas passer, *a minima* pas de manière optimale, les ondes émises par un Lidar. Il est donc nécessaire de prévoir un organe de dégivrage laissant passer les ondes émises par le Lidar.

Le document US 2018/046183 A1 divulgue un dispositif de protection configuré pour protéger un organe d'émission d'ondes électromagnétiques d'après le préambule de la revendication 1.

L'invention a notamment pour but de remédier aux inconvénients évoqués ci-dessus en fournissant un radôme de Lidar permettant de protéger un Lidar tout en assurant une bonne transmission des ondes émises par le Lidar, même lorsque la température extérieure est faible et permet la présence d'une couche de glace, de neige ou de givre. En d'autres termes, un tel radôme laisse passer les ondes du Lidar avec une atténuation aussi faible que possible pour ne pas perturber le fonctionnement du Lidar lui-même.

A cet effet, l'invention a pour objet un dispositif de protection configuré pour protéger un organe d'émission d'ondes électromagnétiques de type Lidar de véhicule automobile, comprenant une paroi comportant :
- au moins un organe de dégivrage,
- au moins une couche composée d'un revêtement anti-rayure,
   caractérisé en ce que la paroi est configurée pour être traversée par des ondes électromagnétiques d'au moins une longueur d'onde comprise entre 10 nm et 2000 nm,
et en ce que la paroi comporte :
- une épaisseur inférieure ou égale à 3 mm, de préférence comprise entre 1,5 mm et 2 mm,
- au moins une couche formant support, comprenant un matériau plastique transparent auxdites ondes électromagnétiques, et
- au moins une couche composée d'un revêtement anti-reflet configurée pour limiter une réflexion desdites ondes électromagnétiques sur la paroi.

Ainsi, un tel dispositif de protection permet une atténuation faible des ondes émises par le Lidar, tout en garantissant le fonctionnement de celui-ci même en cas de température basse menant à un dépôt de neige, de givre ou de glace sur le dispositif de protection.

Par ailleurs, la combinaison du matériau plastique transparent auxdites ondes électromagnétiques formant la au moins une couche formant support et de l'épaisseur limitée de la paroi permet d'obtenir une paroi présentant une atténuation limitée, et permet par conséquent d'avoir une paroi adaptée au Lidar. De plus, l'utilisation d'un matériau plastique est économique, facilite la fabrication et permet de limiter le poids du dispositif de protection.

En outre, les ondes émises par un organe d'émission d'ondes peuvent traverser le dispositif de protection, ce dernier étant, tant au niveau des matériaux utilisés pour le fabriquer qu'au niveau de l'organe de dégivrage se situant sur le parcours des ondes, sensiblement transparent à ces dernières. On entend de manière conventionnelle par sensiblement transparent la capacité d'un matériau traversé par un flux d'ondes incident à transmettre une fraction supérieure à 90% du flux d'ondes le traversant. Par la suite, on utilisera le terme « *transparent* » pour faire référence à cette définition.

Ainsi, on entend par transparent aux ondes émises par un Lidar un matériau qui, traversé par un flux incident de rayonnement infra-rouge, lumineux (onde du visible) ou ultraviolet, dont la longueur d'onde est comprise entre 10 nm et 2000 nm, transmet une fraction supérieure à 90% du flux de rayonnement la traversant.

Suivant d'autres caractéristiques optionnelles du dispositif de protection, prises seules ou en combinaison :
- la paroi est configurée pour être traversée par des ondes électromagnétiques d'au moins une longueur d'onde comprise entre 800 et 1600 nm, de préférence choisie dans le groupe comprenant 850 nm, 905 nm, 1050 nm, 1550 nm. Ces longueurs d'ondes sont particulièrement adaptées aux organes d'émission d'ondes électromagnétiques de type Lidar.
- la paroi comporte en outre au moins une couche intérieure comprenant l'organe de dégivrage, la couche intérieure étant disposée sur une face proximale de la couche formant support configurée pour, à l'état monté, faire face à l'organe d'émission d'ondes électromagnétiques. Ainsi, l'organe de dégivrage est intégré facilement à la paroi, et se trouve protégé de toute influence mécanique extérieure par la couche formant support.
- la couche composée d'un revêtement anti-reflet est disposée sur une face de la couche intérieure distante de la couche formant support. Ainsi, la couche anti-reflet est intégrée facilement à la paroi, et se trouve protégée de toute influence mécanique extérieure par la couche formant support et la couche intérieure. Ainsi, l'endommagement de la couche anti-reflet est évité. Même si la couche anti-rayure est endommagée par des éléments extérieurs, la couche anti-reflet produit encore pleinement son effet anti-reflet. En outre, la couche anti-reflet joue un rôle d'isolant thermique vis-à-vis de l'organe de dégivrage, ce qui limite la dissipation thermique depuis l'organe de dégivrage vers l'intérieur en direction du Lidar, et de fait maximise l'effet dégivrant de l'organe de dégivrage sur la face extérieure de la paroi.
- la couche composée d'un revêtement anti-reflet est la couche de la paroi disposée, à l'état monté, la plus proche du Lidar. Ainsi, l'endommagement de la couche anti-reflet est évité. Même si la couche anti-rayure est endommagée par des éléments extérieurs, la couche anti-reflet produit encore pleinement son effet anti-reflet. En outre, la couche anti-reflet joue un rôle d'isolant thermique vis-à-vis de l'organe de dégivrage, ce qui limite la dissipation thermique depuis l'organe de dégivrage vers l'intérieur en direction du Lidar, et de fait maximise l'effet dégivrant de l'organe de dégivrage sur la face extérieure de la paroi.
- la couche intérieure présente une épaisseur comprise entre 75 µm et 1 mm. Ainsi, l'épaisseur de la couche intérieure comprenant l'organe de dégivrage est adaptée pour minimiser l'atténuation des ondes émises par le Lidar.
- la couche composée d'un revêtement anti-rayure est une couche extérieure disposée sur une face distale de la couche formant support configurée pour, à l'état monté, être distante de l'organe d'émission d'ondes électromagnétiques. Ainsi, l'atténuation des ondes émises par le Lidar reste faible même en cas de petits chocs mécaniques sur le dispositif de protection, du fait de la résistance du revêtement anti-rayure composant la couche extérieure.
- l'organe de dégivrage est choisi dans le groupe comprenant un réseau de filaments chauffants, un serpentin composé d'une encre conductrice, un réseau de nano-éléments comportant des nanofils électriquement conducteurs, un réseau de nano-éléments comportant des nanotubes électriquement conducteurs, ou une combinaison de ces éléments. La sélection d'un tel organe de dégivrage est avantageuse en ce que celui-ci influence faiblement l'atténuation des ondes émises par le Lidar, tout en permettant un dégivrage efficace du dispositif de protection.
- l'organe de dégivrage est un réseau de nano-éléments comportant des nanofils électriquement conducteurs. Ainsi, le chauffage est réalisé de manière homogène sur toute la surface utile du dispositif de protection traversée par les ondes électromagnétiques.
- le réseau de nano-éléments est surfacique et couvre toute la surface configurée pour être traversée par les ondes électromagnétiques émises par l'organe d'émission d'ondes électromagnétiques. Ainsi, le dégivrage est réalisé de manière uniforme sur toute la surface utile du dispositif de protection, tout en limitant l'atténuation des ondes émises par l'organe d'émission d'ondes électromagnétiques. Par surfacique, il faut comprendre que sur toute la surface sur laquelle est présent le réseau de nano-éléments, l'épaisseur du réseau de nano-éléments est constante.
- l'organe de dégivrage présente une puissance surfacique de chauffage d'au moins 1,3 kW/m², de préférence supérieure à 2,2 kW/m². Ainsi, le dégivrage du dispositif de protection est particulièrement rapide et efficace.
- la couche formant support, la couche composée d'un revêtement anti-reflet et la couche composée d'un revêtement anti-rayure comportent une rugosité inférieure à 0,02 µm. Ainsi, l'atténuation des ondes émises par le Lidar est davantage limitée.
- l'organe de dégivrage est sensiblement bidimensionnel et présente une épaisseur inférieure à 200 µm, de préférence inférieure à 400 nm. Ainsi, l'organe de dégivrage n'atténue que faiblement les ondes émises par le Lidar. De préférence, l'organe de dégivrage présente une épaisseur constante.

L'invention a également pour objet un véhicule automobile comportant un dispositif de protection du type précité et un organe d'émission d'ondes électromagnétiques, dans lequel le dispositif de protection est une pièce de carrosserie et l'organe d'émission d'ondes électromagnétiques est un Lidar. Ainsi, du fait que le dispositif de protection est une pièce de carrosserie, aucun autre élément du véhicule ne vient atténuer les ondes émises par le Lidar.

L'invention a enfin pour objet un procédé de fabrication d'un dispositif de protection du type précité, comportant les étapes suivantes :
b) moulage d'une couche formant support par injection de matériau thermoplastique dans un moule ;
d) application d'un revêtement anti-reflet pour former une couche composée d'un revêtement anti-reflet ;
e) application d'un revêtement anti-rayure pour former une couche composée d'un revêtement anti-rayure,
lequel comporte en outre l'étape suivante :
a) préalablement à l'étape b), disposition d'une couche intérieure sous forme d'un film comportant un organe de dégivrage dans le moule ; ou
c) après l'étape b) et avant l'étape d), collage ou pulvérisation d'une couche intérieure comprenant un organe de dégivrage sur la couche formant support.

Ainsi, le dispositif de protection est réalisé de manière particulièrement simple, et permet un montage ultérieur aisé sur un véhicule automobile.

### Brève description des figures

L'invention sera mieux comprise à la lecture de la description qui va suivre donnée uniquement à titre d'exemple et faite en se référant aux dessins annexés dans lesquels :
[Fig. 1] la figure 1 représente en perspective, à titre illustratif et non limitatif, un dispositif de protection d'un Lidar en position sur la face avant d'un véhicule.
[Fig. 2] la figure 2 est une vue schématique de côté en section d'un détail d'un ensemble comportant un dispositif de protection et un organe d'émission d'ondes électromagnétiques, dans cet exemple un Lidar.
[Fig. 3] la figure 3 est une vue schématique de face d'un détail d'un dispositif de protection selon un premier mode de réalisation.
[Fig. 4] la figure 4 est une vue schématique de face d'un détail d'un dispositif de protection selon un deuxième mode de réalisation.
[Fig. 5] la figure 5 est une vue schématique de face d'un détail d'un dispositif de protection selon un troisième mode de réalisation.

### Description détaillée

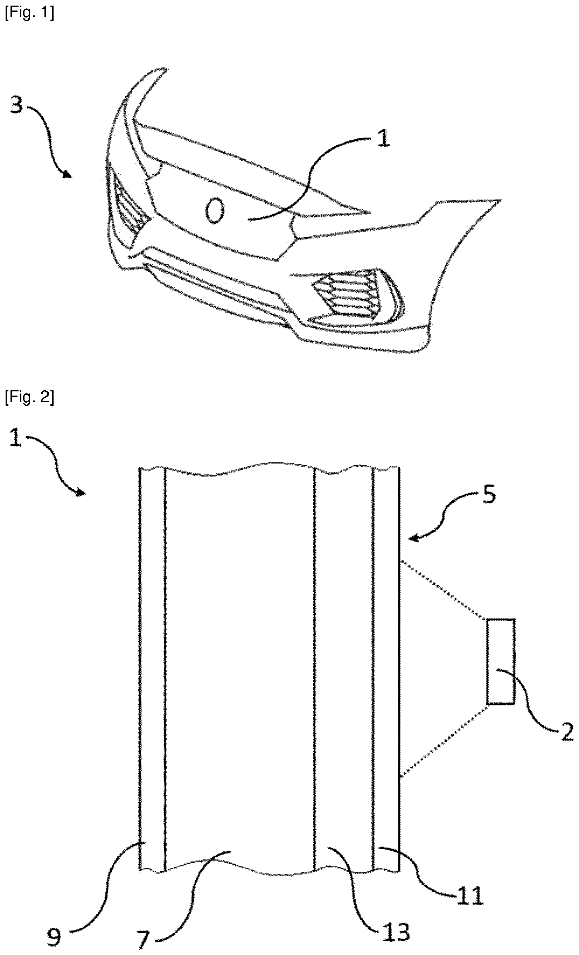

La figure 1 représente, à titre illustratif et non limitatif, un dispositif de protection 1, appelé également radôme ou lidôme, d'un organe d'émission d'ondes électromagnétiques, ici un Lidar 2, en position sur la face avant d'un véhicule automobile 3. Dans cet exemple, le Lidar 2 est placé derrière le dispositif de protection 1 qui est une pièce de carrosserie, de façon à ce que les ondes électromagnétiques (lumière du spectre visible, infrarouge ou ultraviolet) émises ou reçues par le Lidar 2 traversent le radôme 1. L'homme du métier comprendra que selon sa fonction, le Lidar 2 peut être monté dans une autre position du véhicule, par exemple en face arrière.

La figure 2 représente schématiquement en vue de côté un dispositif de protection 1 d'un Lidar 2 selon un premier mode de réalisation de l'invention. Le dispositif de protection 1 comprend une paroi 5.

La paroi 5 comporte une couche 7 formant support, une couche 9 composée d'un revêtement anti-rayure, une couche 11 composée d'un revêtement anti-reflet. Dans cet exemple, la paroi 5 comprend également une couche intérieure 13 comprenant un organe de dégivrage 15.

La paroi 5 peut avoir une forme adaptée à la position où elle est installée, telle que la face avant ou arrière du véhicule. Préférentiellement, la forme de la paroi 5 est telle qu'elle assure une continuité esthétique avec les pièces adjacentes.

De plus, la paroi 5 peut avoir une épaisseur comprise entre 1,5 mm et 3 mm, de préférence entre 1,5 mm et 2 mm, afin d'obtenir un bon compromis entre les performances mécaniques, les coûts, l'absorption des ondes du Lidar 2 et afin de permettre une bonne transmission thermique à travers pour le dégivrage.

Avantageusement, les deux faces de la paroi 5 ont une rugosité inférieure ou égale à 0,02 µm. Il est à noter qu'une faible rugosité contribue elle aussi à la limitation de la réflexion des ondes du Lidar 2.

En outre, le rayon de courbure de la paroi peut être optimisé afin de minimiser l'atténuation des ondes du Lidar 2. Autrement dit, la distance entre le Lidar 2 et la paroi 5 est choisie de sorte à permettre au faisceau du Lidar 2 de balayer la zone entière de dégivrage du dispositif de protection 1.

La couche 7 formant support possède une épaisseur adaptée à la longueur d'onde du Lidar 2. Elle possède par exemple une rugosité inférieure à 0,02 µm, et est réalisée dans un matériau plastique transparent aux ondes électromagnétiques correspondant à la longueur d'onde du Lidar 2, de préférence un matériau thermoplastique. Ainsi, la couche 7 formant support est réalisée en matière plastique transparente à la lumière, notamment aux ondes émises par le Lidar 2, telle qu'une matière à base de polycarbonate (PC), polyméthacrylate de méthyle (PMMA), ou de copolymère d'oléfine cyclique, en anglais cyclic olefin copolymer (COC). L'utilisation du plastique présente un certain nombre d'avantages, entre autres : la couche en plastique transparent est légère, facile à fabriquer et peu coûteuse. Par exemple, la couche 7 formant support possède un indice de réfraction inférieur ou égal à 1,33.

Dans un exemple non représenté, la couche 7 formant support peut être réalisée en deux matières plastiques différentes, l'une étant rapportée sur l'autre, par exemple par surmoulage. Naturellement, au moins la matière de la couche 7 formant support en regard du Lidar 2 en position montée du dispositif de protection 1 est transparente aux ondes du Lidar 2. Cette solution permet au dispositif de protection d'avoir plus de flexibilité, variété et complexité en ce qui concerne sa forme esthétique. En particulier, il est possible d'assurer une continuité esthétique avec la peau adjacente du véhicule sur lequel le dispositif de protection 1 est monté grâce à la présence de la seconde matière plastique.

La couche 9 composée d'un revêtement anti-rayure est un vernis anti-rayure tel que le vernis Hardrise ^{®} commercialisé par la société Polyrise, lequel est apte à protéger la couche 7 formant support contre les rayures ou abrasions. La couche 9 est une couche extérieure disposée sur une face distale de la couche 7 formant support configurée pour, à l'état monté, être distante du Lidar 2. La couche 9 possède par exemple une rugosité inférieure à 0,02 µm. L'épaisseur de la couche 9 est par exemple inférieure ou égale à 400 nm, de préférence sensiblement égale à 200 nm pour favoriser la transparence aux ondes issues du Lidar 2. Cela conduit à un coût raisonnable et une transmission des ondes du Lidar satisfaisante, tout en procurant une excellente résistante aux rayures et à l'abrasion.

La couche 11 composée d'un revêtement anti-reflet est configurée pour limiter une réflexion de ondes électromagnétiques sur la paroi 5. La couche 11 est composée d'un vernis anti-reflet ayant un indice de réfraction inférieur ou égal à 1,57, tel que le vernis Viewrise ^{®} commercialisé par la société Polyrise, qui est apte à limiter la réflexion des ondes visibles (longueur d'onde comprise entre 400 nm et 800 nm) jusqu'à moins de 2% mais s'avère aussi efficace pour limiter les réflexions des ondes du Lidar 2 dont la longueur d'onde varie généralement entre 800 nm et 1600 nm, de préférence de 850 nm, 905 nm, 1050 nm ou 1550 nm. La couche 11 possède par exemple une rugosité inférieure à 0,02 µm. L'épaisseur de la couche 11 est inférieure ou égale à 400 nm, préférentiellement inférieure à 200 nm. Cela conduit à un coût raisonnable et une transmission des ondes du Lidar satisfaisante. Dans l'exemple illustré, la couche 11 composée d'un revêtement anti-reflet est la couche de la paroi 5 disposée, à l'état monté, la plus proche du Lidar 2. En d'autres termes, comme représenté sur la figure 2, la couche 11 composée d'un revêtement anti-reflet est disposée sur une face de la couche intérieure 13 distante de la couche 7 formant support. Par exemple, comme représenté sur la figure 2, la face de la couche intérieure 13 distante de la couche 7 formant support est sensiblement plane, afin que la couche 11 composée d'un revêtement anti-reflet produise efficacement son effet anti-reflet.

Les couches 9, 11 de revêtement peuvent être appliquées par tout moyen approprié connu de l'homme du métier. Par exemple, après la fabrication de la couche 7 formant support elle-même, par exemple par moulage par injection, et de la mise en place préalable ou ultérieure de la couche intérieure 13 comportant l'organe de dégivrage sur la couche 7, on applique le vernis anti-reflet composant la couche 11 sur au moins une face proximale de l'ensemble ainsi formé configurée pour, à l'état monté, faire face au Lidar 2, en le plongeant dans un bain de vernis, ou en pulvérisant du spray. La pulvérisation peut être effectuée par ultrasons, ou au moyen d'un "bol rotatif". Ensuite, ou bien simultanément, on applique le vernis anti-rayure, lequel respecte par exemple le cahier des charges des pièces extérieures automobiles. Ce vernis anti-rayure composant la couche 9 est appliqué sur au moins une face distale de l'ensemble ainsi formé configurée pour, à l'état monté, être distante du Lidar 2, en le plongeant dans un bain de vernis, ou en pulvérisant du spray. La pulvérisation peut être effectuée par ultrasons, ou au moyen d'un "bol rotatif", ou bien par tout autre moyen connu de l'homme du métier.

La couche intérieure 13 est par exemple formée par un film plastique, réalisé dans un matériau compatible chimiquement avec le matériau de la couche 7 formant support, tel que du polycarbonate. La couche intérieure 13 comprend un organe de dégivrage 15. La couche intérieure 13 est disposée sur une face proximale de la couche 7 formant support configurée pour, à l'état monté, faire face au Lidar 2. La couche intérieure 13 présente une épaisseur comprise entre 75 µm et 1 mm. La couche intérieure 13 possède par exemple une rugosité inférieure à 0,02 µm, et est réalisée dans un matériau plastique transparent aux ondes électromagnétiques correspondant à la longueur d'onde du Lidar 2. La couche intérieure 13 comprenant l'organe de dégivrage 15 peut être surmoulée sur la couche 7 formant support. Alternativement, la couche intérieure 13 comprenant l'organe de dégivrage 15 peut être réalisée sous la forme d'un film adhésif et collée sur la couche 7 formant support.

Pour l'alimentation en énergie électrique de l'organe de dégivrage 15 sont prévues des bornes d'alimentation 17. Dans l'exemple illustré, l'organe de dégivrage 15 est un organe de dégivrage pour Lidar. Il est donc transparent aux ondes électromagnétiques d'au moins une longueur d'onde comprise entre 10 nm et 2000 nm, de préférence entre 850 et 1550 nm, plus préférentiellement choisie dans le groupe comprenant 850 nm, 905 nm, 1050 nm, 1550 nm.

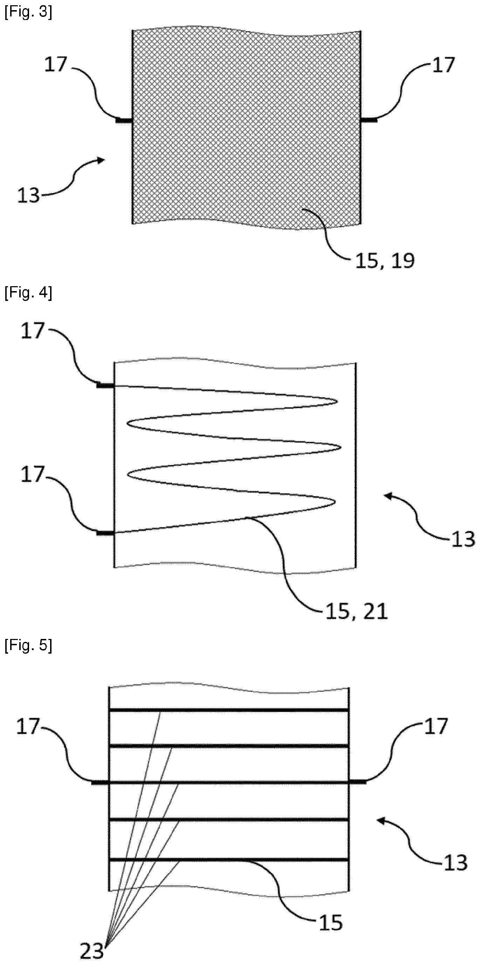

Dans un premier mode de réalisation illustré sur la figure 3, l'organe de dégivrage 15 est réalisé sous la forme d'un un réseau 19 de nano-éléments comportant des nanofils électriquement conducteurs, également appelé nanomèches. Ce réseau est par exemple déposé sur le film plastique de la couche intérieure 13 par pulvérisation sous forme de spray ou bien par évaporation de solvant. L'organe de dégivrage 15 est dans ce cas sensiblement bidimensionnel et présente une épaisseur inférieure à 200 µm, de préférence inférieure à 400 nm. Dans ce mode de réalisation, le réseau 19 de nano-éléments est surfacique et couvre toute la surface configurée pour être traversée par les ondes électromagnétiques émises par le Lidar 2. En d'autres termes, l'épaisseur du réseau 19 de nano-éléments est constante. Ainsi, le dégivrage est réalisé de manière uniforme sur toute la surface utile du dispositif de protection. Le matériau de ces nanofils est métallique, de préférence choisi dans le groupe comprenant : cuivre (Cu), argent (Ag). Alternativement ou de manière complémentaire au réseau 19 de nano-éléments comportant des nanofils électriquement conducteurs, un réseau de nano-éléments comportant des nanotubes électriquement conducteurs peut être utilisé. Le matériau de ces nanotubes est par exemple choisi dans le groupe comprenant : cuivre (Cu), argent (Ag), carbone (C). Alternativement, ce réseau 19 peut être intégré au film plastique de la couche intérieure 13, par exemple par imprégnation. En outre, dans un mode de réalisation particulier non illustré, le réseau 19 pourrait être pulvérisé directement sur la couche 7 formant support pour former une couche intérieure 13 intégrant un organe de dégivrage 15.

Dans un deuxième mode de réalisation illustré sur la figure 4, l'organe de dégivrage 15 est formé par un serpentin 21 composé d'une encre conductrice. Le tracé du serpentin 19 est réalisé de manière à être compatible avec les signaux d'émissions et de réception du Lidar 2 selon sa longueur d'onde. La forme du serpentin résulte d'un compromis entre la limitation des zones d'ombres du faisceau lumineux issu du Lidar 2 et la maximisation de la surface pouvant être dégivrée. Par exemple, la largeur du serpentin 21, en d'autres termes la largeur de la trace d'encre conductrice est inférieure à la longueur d'onde du Lidar 2, de préférence inférieure à la moitié de la longueur d'onde du Lidar 2. Par exemple, la moyenne de l'espace entre chacun des méandres du serpentin 21 est supérieure à la longueur d'onde du Lidar 2, de préférence au moins 2 fois supérieure, plus préférentiellement au moins 5 fois supérieure. L'organe de dégivrage 15 est dans ce cas sensiblement bidimensionnel et présente une épaisseur inférieure à 200 µm, de préférence inférieure à 400 nm.

Dans un troisième mode de réalisation illustré sur la figure 5, l'organe de dégivrage 15 est formé par un réseau de filaments chauffants 23. Les filaments sont électriquement conducteurs et sont par exemple composés de métal, comme du cuivre ou de l'argent. Les filaments 23 présentent un diamètre inférieur à 200 µm, de préférence inférieur à 400 nm. Dans cet exemple, les filaments 23 sont sensiblement parallèles et s'étendent sensiblement dans un même plan. Ainsi, dans ce mode de réalisation, l'organe de dégivrage 15 est sensiblement bidimensionnel et présente une épaisseur inférieure à 200 µm, de préférence inférieure à 400 nm. Bien que dans l'exemple illustré, les fils se situent au sein de la couche intérieure 13, ceux-ci peuvent également être disposés sur une face de la couche intérieure 13.

Un premier procédé de fabrication d'un dispositif de protection 1 selon l'invention peut comporter les étapes suivantes :
a) disposition d'une couche intérieure 13 sous forme d'un film comportant un organe de dégivrage 15 dans un moule ;
b) moulage d'une couche 7 formant support par injection de matériau thermoplastique dans le moule ;
d) application d'un revêtement anti-reflet pour former une couche 11 composée d'un revêtement anti-reflet ;
e) application d'un revêtement anti-rayure pour former une couche 9 composée d'un revêtement anti-rayure.

Un deuxième procédé de fabrication d'un dispositif de protection 1 selon l'invention peut comporter les étapes suivantes :
b) moulage d'une couche 7 formant support par injection de matériau thermoplastique dans un moule ;
c) collage ou pulvérisation d'une couche intérieure 13 comprenant un organe de dégivrage 15 sur la couche 7 formant support ;
d) application d'un revêtement anti-reflet pour former une couche 11 d'un revêtement anti-reflet ;
e) application d'un revêtement anti-rayure pour former une couche 9 composée d'un revêtement anti-rayure.

Dans les procédés précités, au cours de l'étape d), le revêtement anti-reflet peut être appliqué sur la face proximale de la pièce semi-finie, c'est-à-dire sur la couche intérieure 13.

Dans les procédés précités, au cours de l'étape e), le revêtement anti-rayure peut être appliqué sur la face distale de la pièce semi-finie, c'est-à-dire sur la couche 7 formant support.

L'invention n'est pas limitée aux modes de réalisation présentés et d'autres modes de réalisation apparaîtront clairement à l'homme du métier. Il est notamment possible de réaliser un dispositif de protection de plusieurs Lidars, comportant plusieurs surfaces utiles pour plusieurs Lidars, chaque surface utile en regard de chaque Lidar comportant les éléments précités. La paroi 5 pourrait également comporter une couche de conduction thermique, afin d'améliorer l'efficacité de l'organe de dégivrage 15.

### Liste de références

- 1 :: dispositif de protection
- 2 :: organe d'émission d'ondes électromagnétiques de type Lidar
- 3 :: véhicule automobile
- 5 :: paroi
- 7 :: couche formant support
- 9 :: couche composée d'un revêtement anti-rayure
- 11 :: couche composée d'un revêtement anti-reflet
- 13 :: couche intérieure
- 15 :: organe de dégivrage
- 17 :: borne d'alimentation
- 19 :: réseau de nano-éléments
- 21 :: serpentin composé d'une encre conductrice
- 23 :: réseau de filaments chauffants

## Revendications

1. Dispositif (1) de protection configuré pour protéger un organe (2) d'émission d'ondes électromagnétiques de type Lidar de véhicule automobile, comprenant une paroi (5) comportant :
- au moins un organe de dégivrage (15), et
- au moins une couche (9) composée d'un revêtement anti-rayure, - la paroi (5) étant est configurée pour être traversée par des ondes électromagnétiques d'au moins une longueur d'onde comprise entre 10 nm et 2000 nm,
**caractérisé en ce que** la paroi (5) comporte :
- une épaisseur inférieure ou égale à 3 mm, de préférence comprise entre 1,5 mm et 2 mm,
- au moins une couche (7) formant support, comprenant un matériau plastique transparent auxdites ondes électromagnétiques,
- au moins une couche (11) composée d'un revêtement anti-reflet configurée pour limiter une réflexion desdites ondes électromagnétiques sur la paroi.

2. Dispositif (1) selon la revendication précédente, dans lequel la paroi (5) comporte en outre au moins une couche intérieure (13) comprenant l'organe de dégivrage (15), la couche intérieure (13) étant disposée sur une face proximale de la couche (7) formant support configurée pour, à l'état monté, faire face à l'organe (2) d'émission d'ondes électromagnétiques.

3. Dispositif (1) selon la revendication précédente, dans lequel la couche intérieure (13) présente une épaisseur comprise entre 75 µm et 1 mm.

4. Dispositif (1) selon l'une quelconque des revendications précédentes, dans lequel la couche (7) formant support, la couche (11) composée d'un revêtement anti-reflet et la couche (9) composée d'un revêtement anti-rayure comportent une rugosité inférieure à 0,02 µm.

5. Dispositif (1) selon l'une quelconque des revendications précédentes, dans lequel l'organe de dégivrage (15) est sensiblement bidimensionnel et présente une épaisseur inférieure à 200 µm, de préférence inférieure à 400 nm.

6. Dispositif (1) selon l'une quelconque des revendications précédentes, dans lequel l'organe de dégivrage (15) est choisi dans le groupe comprenant un réseau de filaments chauffants (23), un serpentin (21) composé d'une encre conductrice, un réseau (19) de nano-éléments comportant des nanofils électriquement conducteurs, un réseau de nano-éléments comportant des nanotubes électriquement conducteurs, ou une combinaison de ces éléments.

7. Dispositif (1) selon la revendication précédente, dans lequel l'organe de dégivrage (15) est un réseau (19) de nano-éléments, et dans lequel le réseau de nano-éléments est surfacique et couvre toute la surface configurée pour être traversée par les ondes électromagnétiques émises par l'organe (2) d'émission d'ondes électromagnétiques.

8. Véhicule automobile (3) comportant un dispositif (1) de protection selon l'une quelconque des revendications précédentes et un organe (2) d'émission d'ondes électromagnétiques, dans lequel le dispositif (1) de protection est une pièce de carrosserie et l'organe (2) d'émission d'ondes électromagnétiques est un Lidar (2).

9. Procédé de fabrication d'un dispositif de protection (1) selon l'une quelconque des revendications 1 à 7, comportant les étapes suivantes :
b) moulage d'une couche (7) formant support par injection de matériau thermoplastique dans un moule ;
d) application d'un revêtement anti-reflet pour former une couche (11) composée d'un revêtement anti-reflet ;
e) application d'un revêtement anti-rayure pour former une couche (9) composée d'un revêtement anti-rayure,
lequel comporte en outre l'étape suivante :
a) préalablement à l'étape b), disposition d'une couche intérieure (13) sous forme d'un film comportant un organe de dégivrage (15) dans le moule ; ou
c) après l'étape b) et avant l'étape d), collage ou pulvérisation d'une couche intérieure (13) comprenant un organe de dégivrage (15) sur la couche (7) formant support.

## Patentansprüche

1. Schutzvorrichtung (1), die zum Schutz eines Elements (2) zum Aussenden elektromagnetischer Wellen vom Typ Lidar eines Kraftfahrzeugs konfiguriert ist und eine Wand (5) aufweisend:
- mindestens ein Enteisungselement (15), und
- mindestens eine Schicht (9), die aus einer kratzfesten Beschichtung besteht, wobei die Wand (5) so konfiguriert ist, dass sie von elektromagnetischen Wellen mit mindestens einer Wellenlänge zwischen 10 µm und 2000 µm durchdrungen wird, **dadurch**
**gekennzeichnet, dass** die Wand (5) aufweist:
- eine Dicke von weniger als oder gleich 3 mm, vorzugsweise zwischen 1,5 mm und 2 mm,
- mindestens eine Trägerschicht (7) aus einem Kunststoffmaterial, das für die elektromagnetischen Wellen transparent ist,
- mindestens eine Schicht (11) aus einer Antireflexbeschichtung, die so gestaltet ist, dass sie die Reflexion der elektromagnetischen Wellen an der Wand begrenzt.

2. Vorrichtung (1) nach dem vorhergehenden Anspruch, bei der die Wand (5) außerdem mindestens eine innere Schicht (13) aufweist, die das Enteisungselement (15) enthält, wobei die innere Schicht (13) auf einer proximalen Seite der Schicht (7) angeordnet ist, die einen Träger bildet, der so konfiguriert ist, dass er im montierten Zustand dem Element (2) zum Aussenden elektromagnetischer Wellen gegenüberliegt.

3. Vorrichtung (1) nach dem vorhergehenden Anspruch, wobei die innere Schicht (13) eine Dicke zwischen 75 µm und 1 mm aufweist.

4. Vorrichtung (1) nach einem der vorhergehenden Ansprüche, wobei die Trägerschicht (7), die aus einer Antireflexbeschichtung bestehende Schicht (11) und die aus einer kratzfesten Beschichtung bestehende Schicht (9) eine Rauigkeit von weniger als 0,02 µm aufweisen.

5. Vorrichtung (1) nach einem der vorhergehenden Ansprüche, wobei das Enteisungselement (15) im Wesentlichen zweidimensional ist und eine Dicke von weniger als 200 µm, vorzugsweise weniger als 400 µm, aufweist.

6. Vorrichtung (1) nach einem der vorhergehenden Ansprüche, wobei das Enteisungselement (15) aus der Gruppe ausgewählt ist, die aus einer Anordnung von Heizfäden (23), einer aus einer leitfähigen Tinte bestehenden Spirale (21), einer Nanoelementen-Array mit elektrisch leitfähigen Nanodrähten, einer Anordnung von Nanoelementen mit elektrisch leitfähigen Nanoröhren oder einer Kombination dieser Elemente besteht.

7. Vorrichtung (1) nach dem vorhergehenden Anspruch, wobei das Enteisungselement (15) ein Array (19) aus Nanoelementen ist, und wobei das Nanoelementen-Array flächenhaft ist und die gesamte Oberfläche bedeckt, die so konfiguriert ist, dass sie von den elektromagnetischen Wellen durchdrungen wird, die von dem Element (2) zum Aussenden elektromagnetischer Wellen ausgesendet werden.

8. Kraftfahrzeug (3) mit einer Schutzvorrichtung (1) nach einem der vorhergehenden Ansprüche und einem Element (2) zum Aussenden elektromagnetischer Wellen, wobei die Schutzvorrichtung (1) ein Karosserieteil ist und das Element (2) zum Aussenden elektromagnetischer Wellen ein Lidar (2) ist.

9. Verfahren zur Herstellung einer Schutzvorrichtung (1) nach einem der Ansprüche 1 bis 7, das die folgenden Schritte umfasst:
b) Formen einer Schicht (7), die einen Träger bildet, durch Einspritzen von thermoplastischem Material in eine Form;
d) Aufbringen einer Antireflexbeschichtung, um eine Schicht (11) zu bilden, die aus einer Antireflexbeschichtung besteht;
e) Aufbringen einer kratzfesten Beschichtung, um eine Schicht (9) aus einer kratzfesten Beschichtung zu bilden, wobei das Verfahren
außerdem den folgenden Schritt umfasst:
a) vor Schritt b) eine innere Schicht (13) in Form einer Folie mit einem Enteisungselement (15) in der Form angeordnet wird; oder
c) nach Schritt b) und vor Schritt d): Kleben oder Sprühen einer inneren Schicht (13), die ein Enteisungselement (15) enthält, auf die Trägerschicht (7).

## Claims

1. Protective device (1) configured to protect a lidar-type electromagnetic waves emission organ (2) of a motor vehicle, comprising a wall (5) comprising:
- at least one defrosting organ (15), and
- at least one layer (9) composed of an anti-scratch coating,
- the wall (5) being configured to be crossed by electromagnetic waves of at least one wavelength between 10 nm and 2000 nm,
**characterized in that** the wall (5) comprises:
- a thickness less than or equal to 3 mm, preferably between 1.5 mm and 2 mm,
- at least one supporting layer (7) comprising a plastic material transparent to said electromagnetic waves,
- at least one layer (11) composed of an anti-reflective coating configured to limit a reflection of said electromagnetic waves on the wall.

2. Device (1) according to the preceding claim, wherein the wall (5) further comprises at least one inner layer (13) comprising the defrosting organ (15), the inner layer (13) being arranged on a proximal face of the supporting layer (7) configured to, in the mounted state, face the electromagnetic waves emission organ (2) .

3. Device (1) according to the preceding claim, wherein the inner layer (13) has a thickness between 75 µm and 1 mm.

4. Device (1) according to any one of the preceding claims, wherein the supporting layer (7), the layer (11) composed of an anti-reflective coating and the layer (9) composed of an anti-scratch coating have a roughness less than 0.02 µm.

5. Device (1) according to any one of the preceding claims, wherein the defrosting device (15) is substantially two-dimensional and has a thickness of less than 200 µm, preferably less than 400 nm.

6. Device (1) according to any one of the preceding claims, wherein the defrosting organ (15) is selected from the group comprising a web of heating filaments (23), a coil (21) composed of a conductive ink, a web (19) of nano-elements comprising electrically conductive nanowires, a web of nano-elements comprising electrically conductive nanotubes, or a combination of these elements.

7. Device (1) according to the preceding claim, wherein the defrosting organ (15) is a web (19) of nano-elements, and wherein the web of nano-elements is surface and covers the entire surface configured to be crossed by electromagnetic waves emitted by the electromagnetic waves emission organ (2).

8. Motor vehicle (3) comprising a protective device (1) according to any one of the preceding claims and an electromagnetic waves emission organ (2), wherein the protective device (1) is a body part and the electromagnetic waves emission organ (2) is a lidar (2).

9. Method of manufacturing a protective device (1) according to any one of claims 1 to 7, comprising the following steps:
b) moulding of a supporting layer (7) by injection of thermoplastic material into a mould;
d) application of an anti-reflective coating to form a layer (11) composed of an anti-reflective coating;
e) application of an anti-scratch coating to form a layer (9) composed of an anti-scratch coating,
which also includes the following step:
a) prior to step b), arrangement of an inner layer (13) in the form of a film comprising a defrosting organ (15) in the mould; or
c) after step b) and before step d), gluing or spraying of an inner layer (13) comprising a defrosting organ (15) on the supporting layer (7).
